Europäisches Patentamt

European Patent Office

Office européen des brevets

(11) Veröffentlichungsnummer: **0 023 715**
**B1**

(12) **EUROPÄISCHE PATENTSCHRIFT**

(45) Veröffentlichungstag der Patentschrift:
**23.02.83**

(51) Int. Cl.³: **C 08 J 3/20,** C 08 J 3/28,
B 29 H 1/10, B 29 H 5/01,
B 29 H 3/00

(21) Anmeldenummer: **80104565.9**

(22) Anmeldetag: **01.08.80**

(54) **Verfahren zur Herstellung von Gummiartikeln.**

(30) Priorität: **04.08.79 DE 2931793**

(43) Veröffentlichungstag der Anmeldung:
**11.02.81 Patentblatt 81/6**

(45) Bekanntmachung des Hinweises auf die Patenterteilung:
**23.02.83 Patentblatt 83/8**

(84) Benannte Vertragsstaaten:
**AT BE CH FR GB IT LI NL SE**

(56) Entgegenhaltungen:
**DE-A-1 469 807**
**DE-A-2 226 105**
**DE-A-2 226 106**
**GB-A-1 507 691**
**US-A-3 084 115**

(73) Patentinhaber: **METZELER KAUTSCHUK GMBH,**
**Westendstrasse 131, D-8000 München 2 (DE)**

(72) Erfinder: **Kempter, Michael, Degenfeldstrasse 10,**
**D-8000 München 40 (DE)**
Erfinder: **Menk, Hermann, Dr., Prielweg 6, D-8990 Bodolz**
**(DE)**

(74) Vertreter: **Michelis, Theodor, Dipl.-Ing.,**
**Westendstrasse 131, D-8000 München 2 (DE)**

Verfahren zur Herstellung von Gummiartikeln

Die Erfindung betrifft ein Verfahren zur Herstellung von Gummiartikeln durch Vernetzung einer auf Pulver-Kautschuk basierenden Kautschukmischung.

Der Verwendung von Pulver-Kautschuk bei der Herstellung von Gummi-Artikeln lag das Bestreben zugrunde, teure Mischaggregate einzusparen und gleichzeitig den Zeitaufwand für die Herstellung der Rohmischung verkürzen zu können.

Die Praxis hat jedoch gezeigt, dass die gestellten Erwartungen durch die Verwendung von Pulverkautschuk nicht erfüllt werden konnten, was vor allem darauf zurückzuführen ist, dass vom Beginn der Mischungsherstellung an mit dem vollständigen, fertigen Gemenge der Rohstoffe der Mischungsrezeptur gearbeitet werden muss. Eine solche Mischung enthält jedoch bei einer Schwefelvernetzung Beschleuniger oder bei der C-C-Vernetzung organische Peroxide; diese Materialien dürfen nur einer relativ geringfügigen Temperaturerhöhung ausgesetzt werden, da sie bei Überschreiten einer bestimmten Temperaturgrenze zu einem Anspringen der Mischung führen. Es kommt also zu einer vorzeitigen Vernetzung bzw. Vulkanisation, so dass die einwandfreie Herstellung des Gummi-Artikels nicht mehr möglich ist.

Ein weiterer Nachteil des bekannten Verfahrens zur Herstellung von Gummi-Artikeln durch Verwendung von Pulver-Kautschuk liegt darin, dass ein loses Gemenge der erforderlichen Mischungsbestandteile nicht direkt, beispielsweise in einem Extruder oder auf einem Kalander, zu einem Halbfabrikat weiterverarbeitet werden kann, sondern das Gemenge vorher einen sogenannten «Kompaktor» durchlaufen muss, der das Schüttgewicht des Gemenges von ca. 0,5 g/cm³ auf die erforderliche Dichte von mindestens 1,0 g/cm³ erhöht. Auch dieser zusätzliche Verarbeitungsschritt macht das bekannte Verfahren kompliziert und verlängert die insgesamt benötigte Verarbeitungszeit.

Der Erfindung liegt deshalb die Aufgabe zugrunde, ein Verfahren zur Herstellung von Gummi-Artikeln der angegebenen Gattung zu schaffen, bei dem die oben erwähnten Nachteile nicht auftreten.

Insbesondere soll ein Verfahren vorgeschlagen werden, das die schnellere und damit wirtschaftlichere Herstellung von Gummiartikeln ermöglicht.

Erfindungsgegenstand ist das Verfahren gemäss Anspruch 1. Bevorzugte Ausführungsformen sind in den Ansprüchen 2-5 angegeben.

Die mit der Erfindung erzielten Vorteile beruhen insbesondere darauf, dass Pulverkautschuk-Mischungen, die durch schnelle Elektronen vernetzt werden sollen, weder Schwefel und andere Vulkanisationsbeschleuniger noch organische Peroxide enthalten. Der thermischen Behandlung einer solchen Kautschukmischung sind also theoretisch nach oben hin keine Temperaturgrenzen gesetzt; in der Praxis ergibt sich zwar eine obere Temperaturgrenze aufgrund der thermischen Belastbarkeit der übrigen Bestandteile der Mischung; diese Belastbarkeit liegt jedoch wesentlich höher als die Belastbarkeit von konventionellen Mischungen, die Vernetzungsinitiatoren enthalten. als die Belastbarkeit von konventionellen Mischungen, die Vernetzungsinitiatoren enthalten.

Aufgrund ihrer hohen thermischen Belastbarkeit können also, solche, keine Vernetzungsinitiatoren enthaltenden, auf Pulverkautschuk-Basis aufgebauten Kautschuk-Mischungen in einem sogenannten «Schnellmischer» gemischt werden, der eine sehr intensive Durchmischung der Kautschuk-Mischung ermöglicht, die wiederum mit einer starken Temperaturerhöhung verbunden ist. Aufgrund dieser bei den bekannten Kautschuk-Mischungen nicht zulässigen Temperaturehöhung verringert sich jedoch die Viskosität der Mischung, so dass die Durchmischung in einer kürzeren Zeitspanne durchgeführt werden kann und sich damit in sehr kurzer Zeit eine sehr homogene Kautschuk-Mischung ergibt. Insgesamt wird also eine wesentliche Verkürzung der erforderlichen Verarbeitungszeit erreicht.

Ausserdem ist kein sogenannter Kompaktor mehr erforderlich, da diese auf Pulverkautschuk basierende Kautschuk-Mischung in einem solchen Schnellmischer bereits die erforderliche Dichte erhält.

Auch auf die bisher übliche Aufmischwalze kann verzichtet werden, da die Verarbeitung in dem Schnellmischer allein bereits zur Herstellung der gewünschten Konsistenz der Kautschuk-Mischung ausreicht.

Die Kautschuk-Mischung kann nach der Schnellmischung bei Bedarf noch unbegrenzt zwischengelagert werden, wenn die sofortige Herstellung der Halbfabrikate nicht möglich ist, ohne dass die Gefahr eines Anspringens besteht. Bei den herkömmlichen, auf Pulver-Kautschuk basierenden Mischungen war dies nicht möglich, da sie, wie bereits erwähnt, schon Vernetzungsinitiatoren enthalten, die unter Umständen schon bei geringfügigen Temperaturerhöhungen zu einem Anspringen der Mischung führen.

Und schliesslich kann auch die Herstellung des Halbfabrikates, beispielsweise durch Kalandrieren bzw. Extrudieren, bei Bedarf bei höheren Temperaturen durchgeführt werden, so dass durch eine entsprechende Wärmebehandlung eine weitere Beeinflussung der Eigenschaften der Gummiartikel möglich ist.

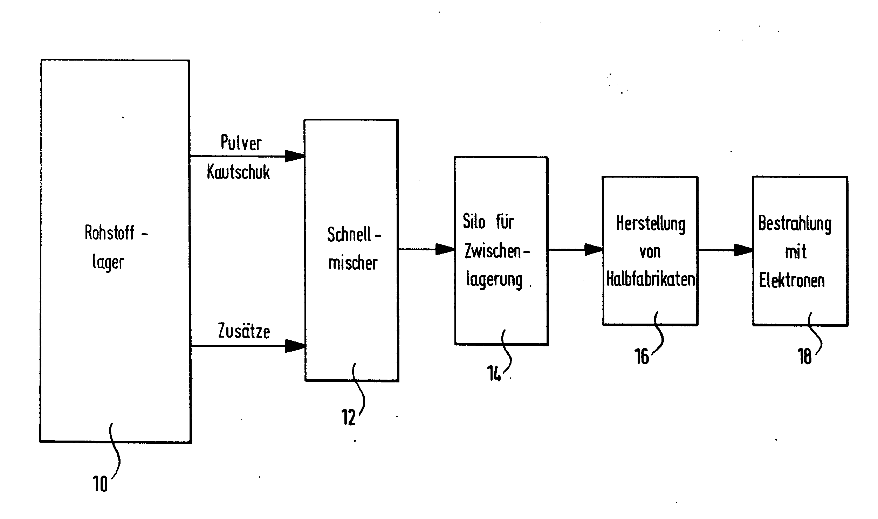

Die Erfindung wird im folgenden anhand eines Ausführungsbeispiels unter Bezugnahme auf die beiliegende, schematische Zeichnung näher erläutert, deren einzige Figur ein Blockschema der Herstellung von Gummi-Artikeln mit dem erfindungsgemässen Verfahren zeigt.

Aus einem Rohstofflager 10 werden Pulverkautschuk einerseits und die benötigten Zusätze andererseits einem Schnellmischer 12 zugeführt, der das Gemenge aus Pulverkautschuk und Zusätzen in sehr kurzer Zeit zu einer sehr homogenen Mischung verarbeitet.

Von dem Schnellmischer 12 wird die fertige, auf Pulverkautschuk basierende Kautschuk-Mischung einem Silo 14 zugeführt, in dem sie nahezu beliebig lange zwischengelagert werden kann, falls dies aus fertigungstechnischen Gründen erforderlich sein sollte.

Bei Bedarf wird aus diesem Silo 14 die benötigte Menge Kautschuk-Mischung abgerufen und in einem Extruder oder einem Kalander zu einem Halbfabrikat verarbeitet, wie bei 16 schematische angedeutet ist. Diese vorgeformten, noch unvulkanisierten Gummiartikel, beispielsweise Profile oder Bahnen, werden dann an einem bei 18 angedeuteten Elektronenstrahlgenerator vorbeigeführt, der sie mit schnellen Elektronen bestrahlt und damit den Kautschuk zu Gummi vernetzt, so dass sich die üblichen, gummielastischen Artikel ergeben.

## Patentansprüche

1. Verfahren zur Herstellung von Gummiartikeln durch Vernetzung einer auf Pulver-Kautschuk basierenden, durchgemischten, homogenisierten Kautschukmischung, dadurch gekennzeichnet, dass zur Durchmischung der keine Vulkanisationsbeschleuniger, jedoch die üblichen Mischungszusätze enthaltenden Pulver-Kautschukmischung ein Schnellmischer verwendet wird, dass aus der durchgemischten Pulver-Kautschukmischung Halbfabrikate hergestellt werden, und dass die Vernetzung der Halbfabrikate durch Bestrahlung mit schnellen Elektronen erfolgt.

2. Verfahren nach Anspruch 1, dadurch gekennzeichnet, dass die Durchmischung der Pulver-Kautschukmischung bei 80 bis 160°C erfolgt.

3. Verfahren nach Anspruch 2, dadurch gekennzeichnet, dass die Durchmischung der Pulver-Kautschukmischung bei 110 bis 140°C erfolgt.

4. Verfahren nach mindestens einem der Ansprüche 1 bis 3, dadurch gekennzeichnet, dass die Pulver-Kautschukmischung kalandriert wird.

5. Verfahren nach mindestens einem der Ansprüche 1 bis 3, dadurch gekennzeichnet, dass die Pulver-Kautschukmischung extrudiert wird.

## Claims

1. A process for the production of rubber articles by cross-linking an intermixed, homogenised rubber mixture which is based on rubber powder, characterised in that a high-speed mixer is used for intermixing the rubber powder mixture which does not contain any vulcanisation accelerators, but does contain the conventional mixture additives, semifinished products are produced from the intermixed rubber powder mixture, and the semifinished products are cross-linked by irradiating with fast electrons.

2. A process according to claim 1, characterised in that the rubber powder mixture is intermixed at from 80 to 160°C.

3. A process according to claim 2, characterised in that the rubber powder mixture is intermixed at from 110 to 140°C.

4. A process according to at least one of claims 1 to 3, characterised in that the rubber powder mixture is calendered.

5. A process according to at least one of claims 1 to 3, characterised in that the rubber powder mixture is extruded.

## Revendications

1. Procédé de fabrication d'articles en caoutchouc vulcanisé par réticulation d'un mélange de caoutschouc homogénéisé, mélangé intimement, à base de caoutchouch pulvérisé, caractérisé en ce qu'il consiste à utiliser un mélangeur rapide pour mélanger intimement le mélange de caoutchouc pulvérisé ne contenent pas d'accélérateur de vulcanisation mais les additifs de mélange habituels, à fabriquer des demi-produits à partir du mélange de caoutchouc pulvérisé mélangé intimement et à effectuer la réticulation des demi-produits en les irradiant par des électrons rapides.

2. Procédé suivant la revendication 1, caractérisé en ce qu'il consiste à effectuer le mélange intime du caoutchouc pulvérisé entre 80 et 160°C.

3. Procédé suivant la revendication 2, caractérisé en ce qu'il consiste à effectuer le mélange intime du caoutchouc pulvérisé entre 110 et 140°C.

4. Procédé suivant l'une au moins des revendications 1 à 3, caractérisé en ce qu'il consiste a calandrer le mélange de caoutchouc pulvérisé.

5. Procédé suivant l'une au moins des revendications 1 à 3, caractérisé en ce qu'il consiste à extruder le mélange de caoutschouc pulvérisé.

Rohstoff-lager 10 → (Pulver Kautschuk / Zusätze) → Schnell-mischer 12 → Silo für Zwischen-lagerung 14 → Herstellung von Halbfabrikaten 16 → Bestrahlung mit Elektronen 18